# EUROPÄISCHE PATENTSCHRIFT

(11) **EP 2 521 445 B1**
(45) Veröffentlichungstag und Bekanntmachung des Hinweises auf die Patenterteilung: **28.08.2019**
(21) Anmeldenummer: 10790557.2
(22) Anmeldetag: 13.12.2010
(51) Int. Cl.: A01N 25/10, B27K 3/15, B27K 3/22, B27K 3/52

(54) **FORMULIERUNG UND DEREN VERWENDUNG**
FORMULATION AND USE THEREOF
FORMULATION ET SON UTILISATION

(30) Priorität: 04.01.2010 EP 10150026
(43) Veröffentlichungstag der Anmeldung: 14.11.2012
(73) Patentinhaber: BASF SE, 67056 Ludwigshafen am Rhein (DE)
(72) Erfinder: MAIER, Michael, 76359 Marxzell (DE); HABICHT, Jörg, 76547 Sinzheim (DE); KRAUS, Alexander, 83552 Evenhausen (DE); KARPOV, Andrey, Metuchen, NJ 08840 (US); ROSOWSKI, Frank, 68239 Mannheim (DE); MÜLLER, Frank, 67069 Ludwigshafen (DE)
(74) Vertreter: Witz, Michael
(86) Internationale Anmeldenummer: PCT/EP2010/069446
(87) Internationale Veröffentlichungsnummer: WO 2011/080051

(56) Entgegenhaltungen:
- WO-A1-2004/100663
- WO-A1-2008/040786
- WO-A1-2009/040248
- US-A1- 2009 293 761

## Beschreibung

Gegenstand der vorliegenden Erfindung ist eine Formulierung enthaltend mind. einen gegenüber Cellulose-haltigen Materialien aktiven Schutzstoff sowie deren Verwendung.

Insbesondere Holz ist als wichtiges Bau- und Konstruktionsmaterial Witterungs- und Temperatureinflüssen ausgesetzt, wobei wechselnde Temperatur- und Feuchtigkeitsbedingungen die zersetzenden Einflüsse durch Bakterien, Pilze und Insekten fördern.

Die Verwendung Metall-haltiger und insbesondere Metallsalz-haltiger Formulierungen ist in diesem Zusammenhang zur Imprägnierung und zum Schutz von Holz-haltigen Materialien und insbesondere Baumaterialien seit vielen Jahrzehnten bestens bekannt.

Insbesondere die Verwendung von Kupfer-haltigen Holzschutzmitteln soll den Abbau der Cellulose- oder Ligninbestandteile des Holzes durch Pilze und Insekten verhindern.

Durch die Entwicklung neuartiger Holz-basierender Baumaterialien hat der imprägnierende und vorbeugende Holzschutz insbesondere im letzten Jahrzehnt an Bedeutung gewonnen. Hier steht insbesondere der Schutz von Holzfaserplatten und Vollholzplatten im Vordergrund. Bei der Behandlung mit Metall-haltigen Holzschutzmitteln steht weiterhin der vorbeugende Schutz von Holz gegen holzzerstörende Pilze und Insekten im Vordergrund.

Wichtige Vertreter von Pilzen, die die Zellwandbestandteile Cellulose, Hemicellulosen und Lignine des Holzes angreifen, sind die Holz-verfärbenden und - zerstörenden Vertreter der Braunfäulepilze, Weißfäulepilze und die Moderfäulepilze. Die optimalen Wachstumsbedingungen der Holz-zerstörenden Pilze liegen im Temperaturbereich zwischen 0 und 40 ° C sowie bei einer Holzfeuchtigkeit von 20 bis 100%. Je nach Pilzart werden nur bestimmte Holzarten oder vorwiegend der Splint- bzw. Kernholzanteil angegriffen.

Bei den Holz-zerstörenden Insekten ist zwischen den Insekten zu unterscheiden, die im Holz wohnen, dort Brutplätze anlegen und die Brut aufziehen, und solchen, die das Holz als Nahrungsquelle nutzen. Frischholzinsekten leben u.a. in frisch gefälltem Holz und auf Holzlagerplätzen. Trockenholzinsekten kommen an und in luft- bzw. nutzungstrockenem Holz im Freien sowie in und an Gebäuden vor. In der Regel benötigen diese Insekten eine Holzfeuchtigkeit von mindestens 10% und Temperaturen zwischen 10 und 38 ° C.

Die für deren Bekämpfung geeigneten Holzschutzmittel ordnet man üblicherweise drei grundlegenden Kategorien zu, die sich an den jeweiligen Lösemittelmedien orientieren. So unterscheidet man zwischen den Wasser-basierten, den Öl-basierten und den Creosotöl (Teeröl-)basierten Systemen.

Wässrige Holzschutzmittel umfassen Chrom-Kupfer-Arsenate (CCA), ammoniakalische Kupfer-Quat-Verbindungen (ACQ), sowie alternative Wirkstoffkombinationen auf Basis von Kupfer und zusätzlichen Co-Bioziden. Die mit diesen Vertretern behandelten Hölzer zeigen nach ihrer Behandlung grünliche bis graugrünliche Verfärbungen aufgrund der chemischen Reaktion zwischen den Kupferbestandteilen des Holzschutzmittels und den Ultraviolettstrahlungen des Sonnenlichts. Nachteilig bei diesen Vertretern ist deren Auswasch- und Auslaugverhalten, insbesondere betreffend die Chromanteile, die die Böden und Grundwässer belasten können. Demgegenüber weisen die Creosotöl-haltigen Holzschutzmittel kein ausgeprägtes Auswaschverhalten auf. Zudem sind diese Mittel gegenüber Metallen nicht korrosiv. Nachteilig bei diesen Systemen ist allerdings, dass sie nicht mit Anstrichfarben kompatibel sind und deshalb immer aufgrund ihres Bitumengehaltes eine dunkle Färbung aufweisen und zudem einen abstoßenden Geruch verströmen. Die Öl-basierten Systeme enthalten meist Leichtöle, wie Pentachlorphenol, Kupfernaphthenate und Kupfer-8-Chinolinolate. Auch die mit diesen Mitteln behandelten Hölzer weisen eine Oberfläche auf, die nicht überstrichen werden kann, die ebenfalls dunkel gefärbt ist und zudem unnatürliche Farbschattierungen zeigt.

Die meisten Holzschutzmittel der neueren Generation weisen lösliche Kupferverbindungen auf, wie z.B. Kupferalkanolamin-Komplexe, Kupferpolyasparaginsäure-Komplexe, alkalische quaternäre Kupferverbindungen, Kupferazole, Kupferborazole, Kupferbis(dimethyldithiocarbamat), ammoniakalische Kupfercitrate, Kupfercitrate und Kupferethanolamincarbonate.

Nachteilig bei all diesen Schutzmitteln mit löslichen Kupferanteilen ist die Notwendigkeit, diese mit organischen Bioziden zu kombinieren, um ein möglichst breites biologisches Wirkungsspektrum zu erzielen. Es wurde deshalb versucht, als weitere Vertreter von Bioziden öllösliche Biozide mit den Kupferverbindungen zu kombinieren. Zu nennen sind in diesem Zusammenhang bspw. Kupfer(II)-sulfitierte Tanninextrakt-Komplexe, sog. Epicatechine, die in Ölen gelöst, in Wasser emulgiert und so in die Holzkörper injiziert werden können. Vertreter der Triazolgruppe, aber auch quaternäre Amine und Cyclohexyldiazeniumdioxid-Verbindungen sind entweder wasserlöslich oder emulgierbar und deshalb zur Kombination mit den genannten Kupferverbindungen ebenfalls gut geeignet.

Insbesondere die Verbesserung der Anwendungseigenschaften der chromatierten Kupferarsenate (CCA) stand dabei im Vordergrund. Zu verweisen ist hier insbesondere auf das Patent EP 1 651 401 B1, in dem Holzschutzmittel beschrieben sind, die Kupferverbindungen in Teilchenform enthalten sowie ein Verfahren zu deren Herstellung: Die beschriebene Holzkonservierungszusammensetzung umfasst insbesondere eine Mehrzahl von gemahlenen Teilchen, die im Wesentlichen aus einer Kombination schwerlöslicher Kupfersalze mit schwerlöslichen Zinksalzen bestehen und die überwiegend einen durchschnittlichen Durchmesser von weniger als 0,5 µm aufweisen. Neben diesen Metallsalzen enthält die hier beschriebene Konservierungs-zusammensetzung mind. ein korrosionshemmendes Mittel und fakultativ Polymere.

US 6,500,871 B1 beschreibt ein Verfahren zur Herstellung von partikelhaltigen Kolloiden, die auf die Hydrolyse Metall-haltiger Salze zurückzuführen sind. Um derartige Kolloide in wässrigen Dispersionen zu stabilisieren, werden die Ausgangsverbindungen in Form von Mineralsalzen von kationischen Metallen in eine wässrige Lösung eingebracht, anschließend das so erhaltene Produkt mit Hilfe eines wasserlöslichen Blockcopolymeren komplexiert und abschließend unter Kontrolle des Teilchenwachstums eine Hydrolyse durchgeführt. Ein für dieses Verfahren geeignetes Metallkation ist dabei Kupfer, wobei ganz allgemein darauf hingewiesen wird, dass derartige Kolloide in Fungizid- oder Biozid-wirkenden Dispersionen eingesetzt werden können.

Die nicht vorveröffentlichte internationale Patentanmeldung PCT/EP2009/058303 vom 02.07.2009 der BASF SE, Ludwigshafen (publiziert als WO 2010/003870 A1), befasst sich mit einem Verfahren zur Herstellung von Oberflächen-modifizierten und nanopartikulären Kupferverbindungen sowie diese enthaltenden wässrigen Suspensionen. Das beanspruchte Verfahren umfasst im Wesentlichen die Abfolge von vier Verfahrensschritten, wobei vorgesehen ist, Polycarboxylate als wasserlösliche Polymere einzusetzen und insbesondere Polycarboxylatether, die unter dem Markennamen Sokalan der BASF SE im Handel erhältlich sind. Neben diesen ionischen Vertretern sind auch nicht-ionische wasserlösliche Polymere beschrieben, die unter der Bezeichnung Cremophor erhältlich sind. Der Einsatz der dispergierend wirkenden Polycarboxylate beschränkt sich in diesem Zusammenhang auf die homogene und feinteilige Verteilung der Kupferverbindungen in Suspensionen.

Aus dem Stand der Technik sind somit Schutzmittel für Cellulose-haltige Materialien und insbesondere Holzschutzmittel bekannt, die neben den Metall-haltigen bioziden Wirkstoffen nicht-ionische und/oder niedermolekulare Dispergiermittel enthalten. Für die vorliegende Erfindung hat sich deshalb die Aufgabe gestellt, eine neue Formulierung bereitzustellen, enthaltend mind. einen gegenüber Cellulose-haltigen Materialien aktiven Schutzstoff und mind. eine Verbindung mit dispergierenden Eigenschaften. Diese Formulierung sollte für den Einsatz als Pflanzenschutz- oder Holzschutzmittel geeignet sein, in und auf den behandelten Materialien keine unnatürlichen Verfärbungen hervorrufen und zudem die Möglichkeit eröffnen, die mit der neuen Formulierung behandelten Materialien bspw. an ihren Oberflächen weiterzubehandeln und insbesondere durch beliebige Farbtöne zu gestalten. Insbesondere bei der Verwendung als Holzschutzmittel sollten die wirksamen Bestandteile der neuen Formulierung möglichst tief und nachhaltig in die Holzstrukturen eindringen können, einer möglichst geringen Auswaschung unterliegen und insbesondere aufgrund der feinteiligen Struktur der in den Formulierungen enthaltenden Metallbestandteile eine homogene Verteilung im Holzwerkstoff garantieren.

Gelöst wurde diese Aufgabe mit einer entsprechenden Formulierung enthaltend mindestens einen gegenüber Cellulose-haltigen Materialien aktiven Schutzstoff und mindestens eine Verbindung mit dispergierenden Eigenschaften, dadurch gekennzeichnet, dass es sich bei der Verbindung mit dispergierenden Eigenschaften um eine Verbindung a) enthaltend ein verzweigtes Kammpolymer mit Polyether-Seitenketten handelt, und es sich bei dem aktiven Schutzstoff um mindestens eine Kupferverbindung in nanopartikulärer Form handelt, wobei die mittlere Teilchengröße des aktiven Schutzstoffs gemessen mittels Laserbeugung in einem Bereich von 1 bis 1000 nm liegt, wobei es sich bei der Verbindung a) um einen Polycarboxylatether a₁), einen Polycarboxylatester a₂), ein ungeladenes Copolymer a₃) oder Mischungen daraus handelt, wobei es sich bei dem Polycarboxylatester a₂) um ein Polymer handelt, herstellbar durch Polymerisation eines Monomergemisches (I), enthaltend als Hauptkomponente einen Vertreter des Monomertyps Carbonsäure, wobei die Monomermischung (I) ein (Alkoxy)polyalkylenglykolmono(meth)acrylsäureester-Monomer (a) der allgemeinen Formel (II) 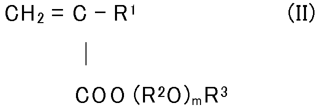 enthält, worin R¹ für ein Wasserstoffatom oder eine CH₃-Gruppe steht, R²O für einen Vertreter oder eine Mischung aus mind. zwei Oxyalkylengruppen mit 2 bis 4 Kohlenstoffatomen, R³ für ein Wasserstoffatom oder eine Alkylgruppe mit 1 bis 5 Kohlenstoffatomen und m für eine Zahl zwischen 1 und 250 steht und die durchschnittliche Molzahl der zugesetzten Oxyalkylengruppe repräsentiert, zusätzlich als Monomer (b) eine (Meth)acrylsäure der allgemeinen Formel (III), 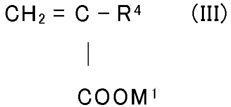 worin R⁴ für ein Wasserstoffatom oder eine CH₃-Gruppe steht und M¹ für ein Wasserstoffatom, ein einwertiges Metallatom, ein zweiwertiges Metallatom, eine Ammoniumgruppe oder eine organische Amingruppe, und ggf. ein Monomer (c), welches mit den Monomeren (a) und (b) copolymerisierbar ist, und wobei die Kupferverbindung ein schwerlösliches Kupfersalz ist.

Neben der Lösung sämtlicher Einzelaufgaben konnte überraschend festgestellt werden, dass die beanspruchten Formulierungen durch den Einsatz der beanspruchten Dispergiermittel eine verbesserte Stabilität aufweisen und dass durch sie auch der Feststoffgehalt in den Formulierungen gesteigert werden kann, wobei insbesondere hervorzuheben ist, dass die feinteiligen Wirkstoffpartikel durch das Zusammenwirken mit den Dispergiermitteln homogen in das Cellulose-haltige Material und insbesondere in die Holzstrukturen sehr tief eindringen können, wobei offensichtlich die Dispergiermittel die Porengängigkeit verbessern und gleichzeitig das Auswaschverhalten, das sog. Leaching, reduzieren.

Als geeignet haben sich Formulierungen erwiesen, bei denen es sich bei dem gegenüber Cellulose-haltigen Materialien aktiven Schutzstoff um mind. eine Kupferverbindung in nanopartikulärer Form handelt.

Geeignete Vertreter der Kupferverbindungen folgen der allgemeinen Formel

[Cu²⁺]₁₋ₓ[M^{k+}]ₓ[Xⁿ⁻]ₐ[Y^{m-}]_{b} · e H₂O,

wobei
M^{k+} ein Metallion mit der Wertigkeit k ist,
0 ≤ x ≤ 0,5,
Xⁿ⁻ mindestens ein anorganisches Anion mit der mittleren Wertigkeit n ist, welches mit Kupferionen in Wasser einen Feststoff bildet,
Y^{m-} ein oder mehrere organische Anionen mit der Wertigkeit m ist,
a ≥ 0, b ≥ 0 und das Verhältnis von a, b und x von den Wertigkeiten k, n und m abhängt gemäß der Formel a · n + b · m = 2 · (1-x) + x · k,
e ≥ 0.

Die Wertigkeiten der genannten Ionen sind naturgemäß ganze Zahlen.

Bei den Metallionen M^{k+} kann es sich bspw. um Ionen von Erdalkali- oder Übergangsmetallen handeln, vorzugsweise um Magnesium, Calcium, Chrom, Kobalt, Nickel, Zink oder Silberionen, wobei Zink oder Silberionen besonders bevorzugt sind. Die Metallionen M^{k+} sind dabei in geringerer Zahl vorhanden als die Kupferionen (0 ≤ x ≤ 0,5). Bei den Anionen Xⁿ⁻ und Y^{m-} kann es sich bspw. um Anionen von Mineralsäuren wie Salzsäure, Schwefelsäure, Phosphorsäure, Kohlensäure, Borsäure, schweflige Säure usw. oder um Anionen von organischen Säuren wie Oxalsäure, Benzoesäure, Maleinsäure usw. sowie Polyborate wie B₄O₇²⁻ handeln. Y^{m-} kann auch ein Hydroxidion sein oder aber ein Carboxylat-haltiges Anion, insbesondere in hochmolekularen Mischungen. Liegen die genannten Kupferverbindungen mit der genannten allgemeinen Formel in wässrigem Medium vor, ist e bevorzugt = 0.

Anzumerken ist auch, dass die anorganischen Anionen Xⁿ⁻ mit Kupferionen in Wasser einen als "Trübstoff" ausgebildeten Feststoff bilden. Die Bildung des Feststoffes in insbesonderer sehr kleinteiliger und/oder amorpher Form lässt sich deshalb über die Ausbildung einer Trübe in Verbindung mit deren Lichtstreuung bestimmen.

In einer bevorzugten Ausführungsform der Erfindung ist x = 0. In einer weiteren bevorzugten Ausführungsform der Erfindung ist Xⁿ⁻ ausgewählt aus der Gruppe bestehend aus Carbonat, Phosphat, Hydrogenphosphat, Oxalat, Borat oder Tetraborat und Hydroxidionen und deren beliebige Mischungen.

Erfindungsgemäße Kupferverbindungen werden ausgewählt aus der Gruppe der schwerlöslichen Kupfersalze, wobei insbesondere Kupferhydroxid, Kupferborat, basisches Kupferborat, Kupfercarbonat, basisches Kupfercarbonat, tribasisches Kupfersulfat, Kupferoxychlorid, alkalisches Kupfernitrat, Kupfereisen(III)-cyanid, Kupfereisen(III)-cyanat, Kupferfluorsilicat, Kupferthiocyanat, Kupferdiphosphat, Kupferborid, Kupferphosphat und Kupferoxid in Frage kommen.

In einer bevorzugten Variante handelt es sich bei dem aktiven Schutzstoff um mindestens eine Kupferverbindung, die Oberflächen-modifiziert ist. Diese Modifizierung der Oberfläche kann vorzugsweise im Rahmen der vorliegenden Erfindung durch den Einfluss einer Verbindung mit dispergierenden Eigenschaften erfolgen und insbesondere mit Dispergiermitteln, die im Folgenden näher beschrieben sind. Insgesamt kann jedoch zu den Verbindungen mit dispergierenden Eigenschaften, die in diesem Zusammenhang in Frage kommen, festgestellt werden, dass diese bevorzugt wasserlöslich sind.

Unter einem "wasserlöslichen Polymer" wird dabei im Rahmen dieser Erfindung ein Polymer verstanden, von dem sich bei Raumtemperatur im Allgemeinen mindestens 0,01 Gew.-% in Wasser lösen und welches bis zu einer Konzentration von 50 Gew.-% in Wasser, bevorzugt 75 Gew.-% in Wasser, eine klare einphasige Lösung ohne Trübung bildet. Das mindestens eine wasserlösliche Polymer dient zur Oberflächenmodifizierung der Kupferverbindungen und hilft, diese in nanopartikulärer Form zu stabilisieren.

Bei den erfindungsgemäß zu verwendenden wasserlöslichen Polymeren kann es sich um anionische, kationische, nichtionische oder zwitterionische Polymere handeln. Ihr Molekulargewicht liegt im Allgemeinen im Bereich von etwa 800 bis etwa 500.000 g/mol, bevorzugt im Bereich von etwa 1.000 bis etwa 30.000 mol. Es kann sich um Homo- oder Copolymere handeln und ihre Molekülstruktur kann sowohl linear als auch verzeigt sein. Es sind wasserlösliche Polymere mit einer Kammstruktur.

Geeignete Monomere, aus denen die erfindungsgemäß zu verwendenden wasserlöslichen Polymeren erhältlich sind, umfassen beispielsweise α,β-ungesättigte Carbonsäuren sowie deren Ester, Amide und Nitrile, N-Vinylcarbonsäureamide, Alkylenoxide, ungesättigte Sulfonsäuren und Phosphonsäuren sowie Aminosäuren.

In einer Ausführungsform der Erfindung werden als wasserlösliche Polymere Polycarboxylate verwendet. Bei Polycarboxylaten handelt es sich im Rahmen dieser Erfindung um Polymere auf Basis von mindestens einer α,β-ungesättigten Carbonsäure, beispielsweise Acrylsäure, Methacrylsäure, Dimethacrylsäure, Ethacrylsäure, Maleinsäure, Citraconsäure, Methylenmalonsäure, Crotonsäure, Isocrotonsäure, Fumarsäure, Mesaconsäure und Itaconsäure. Vorzugsweise werden Polycarboxylate auf Basis von Acrylsäure, Methacrylsäure, Maleinsäure oder deren Mischungen verwendet.

Der Anteil der mindestens einen α,β-ungesättigten Carbonsäure an den Polycarboxylaten liegt in der Regel im Bereich von 20 und 100 mol-%, vorzugsweise im Bereich von 50 und 100 mol-%, besonders bevorzugt im Bereich von 75 und 100 mol-%.

Die erfindungsgemäß zu verwendenden Polycarboxylate können sowohl in Form der freien Säure als auch teilweise oder vollständig neutralisiert in Form ihrer Alkalimetall-, Erdalkalimetall- oder Ammoniumsalze eingesetzt werden. Sie können aber auch als Salze aus der jeweiligen Polycarbonsäure und Triethylamin, Ethanolamin, Diethanol-amin, Triethanolamin, Morpholin, Diethylentriamin oder Tetraethylenpentamin eingesetzt werden.

Neben der mindestens einen α,β-ungesättigten Carbonsäure können die Polycarboxylate noch weitere Comonomere enthalten, die in die Polymerkette einpolymerisiert sind, beispielsweise die Ester, Amide und Nitrile der oben angegebenen Carbonsäuren wie Acrylsäuremethylester, Acrylsäureethylester, Methacrylsäuremethylester, Methacrylsäurethylester, Hydroxyethylacrylat, Hydroxypropylacrylat, Hydroxybutylacrylat, Hydroxyethylmethacrylat, Hydroxypropylmethacrylat, Hydroxyisobutylacrylat, Hydroxyisobutylmethacrylat, Maleinsäuremonomethylester, Maleinsäuredimethylester, Maleinsäuremonoethylester, Maleinsäurediethylester, 2-Ethylhexylacrylat, 2-Ethylhexyl-methacrylat, Acrylamid, Methacrylamid, N-Dimethylacrylamid, N-tert.-Butylacrylamid, Acrylnitril, Methacrylnitril, Dimethylaminoethylacrylat, Diethylaminoethylacrylat, Diethyl-aminoethylmethacrylat sowie die Salze der zuletzt genannten basischen Monomeren mit Carbonsäuren oder Mineralsäuren sowie die quaternierten Produkte der basischen (Meth)acrylate.

Außerdem eignen sich als weitere einpolymerisierbare Comonomere Allylessigsäure, Vinylessigsäure, Acrylamidoglykolsäure, Vinylsulfonsäure, Allylsulfonsäure, Methallylsulfonsäure, Styrolsulfonsäure, Acrylsäure-(3-sulfopropyl)ester, Methacrylsäure-(3-sulfopropyl)ester oder Acrylamidomethylpropansulfonsäure sowie Phosphonsäure-gruppen enthaltende Monomere wie Vinylphosphonsäure, Allylphosphonsäure oder Acrylamidomethanpropanphosphonsäure. Die Säuregruppen enthaltenden Monomeren können in Form der freien Säuregruppen sowie in partiell oder in vollständig mit Basen neutralisierter Form bei der Polymerisation eingesetzt werden.

Weitere geeignete copolymerisierbare Verbindungen sind N-Vinylcaprolactam, N-Vinylimidazol, N-Vinyl-2-methylimidazol, N-Vinyl-4-methylimidazol, Vinylacetat, Vinylpropionat, Isobuten, Styrol, Ethylenoxid, Propylenoxid oder Ethylenimin sowie Verbindungen mit mehr als einer polymerisierbaren Doppelbindung wie beispielsweise Diallylammoniumchlorid, Ethylenglykoldimethacrylat, Diethylenglykoldiacrylat, Allylmethacrylat, Trimethylolpropantriacrylat, Triallylamin, Tetraallyloxyethan, Triallylcyanurat, Maleinsäurediallylester, Tetraallylethylendiamin, Divinylidenharnstoff, Pentaerythritdi-, Pentaerythrittri- und Pentaerythrittetraallylether, N,N ' -Methylenbisacrylamid oder N,N ' - Methylenbismethacrylamid.

Es ist selbstverständlich auch möglich, Mischungen der genannten Comonomere einzusetzen. Beispielsweise eignen sich zur Herstellung der erfindungsgemäßen Polycarboxylate Mischungen aus 50 bis 100 mol-% Acrylsäure und 0 bis 50 mol-% eines oder mehrerer der genannten Comonomere.

In einer bevorzugten Ausführungsform der Erfindung werden als wasserlösliche Polymere Polycarboxylatether verwendet.

Zahlreiche der erfindungsgemäß zu verwendenden Polycarboxylate sind unter dem Markennamen Sokalan® (Fa. BASF SE) im Handel erhältlich.

In weiteren Ausführungsformen der Erfindung handelt es sich bei dem wasserlöslichen Polymer um Polyasparaginsäure, Polyvinylpyrrolidon oder um Copolymere aus einem N-Vinylamid, beispielsweise N-Vinylpyrrolidon, und mindestens einem weiteren, eine polymerisierbare Gruppen enthaltenden Monomeren, beispielsweise mit monoethylenisch ungesättigten C₃-C₈-Carbonsäuren wie Acrylsäure, Methacrylsäure, C₈-C₃₀-Alkylestern von monoethylenisch ungesättigten C₃-C₈-Carbonsäuren, Vinylestern von aliphatischen C₈-C₃₀-Carbonsäuren und/oder mit N-Alkyl- oder N,N-Dialkyl-substituierten Amiden der Acrylsäure oder der Methacrylsäure mit C₈-C₁₈-Alkylresten handeln.

Eine bevorzugte Ausführungsform des erfindungsgemäßen Verfahrens ist dadurch gekennzeichnet, dass als wasserlösliches Polymer Polyasparaginsäure verwendet wird. Der Begriff Polyasparaginsäure umfasst im Rahmen der vorliegenden Erfindung sowohl die freie Säure als auch die Salze der Polyasparaginsäure, z. B. Natrium-, Kalium-, Lithium-, Magnesium-, Calcium-, Ammonium-, Alkylammonium-, Zink- und Eisensalze oder Mischungen davon.

In einer weiteren Ausführungsform der Erfindung werden nichtionische wasserlösliche Polymere verwendet. Bei einem nichtionischen wasserlöslichen Polymer handelt es sich im Rahmen dieser Erfindung um oberflächenaktive Substanzen, deren chemische Struktur zwischen 2 und 1000 -CH₂CH₂O- - Gruppen, bevorzugt zwischen 2 und 200
-CH₂CH₂O- - Gruppen, besonders bevorzugt zwischen 2 und 80 -CH₂CH₂O- - Gruppen umfasst. Diese Gruppen entstehen beispielsweise durch Anlagerung einer entsprechenden Anzahl von Ethylenoxidmolekülen an Hydroxyl- oder Carboxylgruppen-haltige Substrate und bilden in der Regel eine oder mehrere zusammenhängende Ethylenglykolketten, deren chemische Struktur der Formel -(-CH₂CH₂O-)ₙ- mit n von ca. 2 bis ca. 80 entspricht.

Die Oberflächenmodifizierung der Kupferverbindung kann im Rahmen der vorliegenden Erfindung vorzugsweise mit einem Verfahren erzielt werden, umfassend die Schritte:
a) Herstellung einer wässrigen Lösung enthaltend Kupferionen (Lösung 1) und einer wässrigen Lösung enthaltend mindestens ein Anion, welches mit Kupferionen einen Trübstoff bildet (Lösung 2), wobei mindestens eine der beiden Lösungen 1 und 2 mindestens eine Hilfssubstanz mit dispergierenden Eigenschaften, vorzugsweise nach Anspruch 1 enthält,
b) Mischen der in Schritt a) hergestellten Lösungen 1 und 2 bei einer Temperatur im Bereich von 0 bis 100° C, wobei die oberflächenmodifizierten nanopartikulären Kupferverbindungen entstehen und unter Bildung einer wässrigen Dispersion in der Lösung teilweise eine Trübung bilden,
c) gegebenenfalls Abtrennen der oberflächenmodifizierten nanopartikulären Kupferverbindungen aus der in Schritt b) erhaltenen wässrigen Dispersion, und
d) gegebenenfalls Trocknung der in Schritt c) erhaltenen oberflächenmodifizierten nanopartikulären Kupferverbindungen.

Ein ähnliches Verfahren ist in PCT/EP2009/058303 (publiziert als WO 2010/003870 A1) beschrieben.

Die Herstellung der in Schritt a) beschriebenen Lösung 1 kann beispielsweise durch Auflösen eines wasserlöslichen Kupfersalzes in Wasser oder einem wässrigen Lösungsmittelgemisch erfolgen. Ein wässriges Lösemittelgemisch kann außer Wasser beispielsweise noch mit Wasser mischbare Alkohole, Ketone oder Ester wie Methanol, Ethanol, Aceton oder Essigester enthalten. Der Wassergehalt in einem solchen Lösemittelgemisch liegt üblicherweise bei mindestens 50 Gew.-%, vorzugsweise bei mindestens 80 Gew.-%.

Bei den wasserlöslichen Kupfersalzen kann es sich beispielsweise um Kupfer-IIhalogenide, -acetate, -sulfate oder -nitrate handeln. Bevorzugte Kupfersalze sind Kupferchlorid, Kupferacetat, Kupfersulfat und Kupfernitrat. Diese Salze lösen sich in Wasser unter Bildung von Kupferionen, welche zweifach positiv geladen und an die sechs Wassermoleküle angelagert sind [Cu(H₂O)₆²⁺].

Die Konzentration der Kupferionen in der Lösung 1 liegt in der Regel im Bereich von 0,05 bis 2 mol/l, bevorzugt im Bereich von 0,1 bis 1 mol/l.

Außer den Kupferionen kann Lösung 1 auch noch weitere Metallionen (M^{k+}) enthalten, welche gegebenenfalls in Schritt b) zusammen feinteilig bis amorph, aber meist eine Trübe bildend mit den Kupferionen ausfallen. Hierbei kann es sich beispielsweise um Ionen von Erdalkali- oder Übergangsmetallen handeln, vorzugsweise um Magnesium-, Calcium-, Chrom-, Cobalt-, Nickel-, Zink- oder Silberionen, besonders bevorzugt um Zink- oder Silberionen. Die weiteren Metallionen sind dabei in geringerer Zahl vorhandenen als die Kupferionen.

Nach dem erfindungsgemäßen Verfahren enthält Lösung 2 mindestens ein Anion, welches mit Kupferionen einen Niederschlag bildet. Bei diesem Anion handelt es sich beispielsweise um Anionen von Mineralsäuren wie Salzsäure, Schwefelsäure, Phosphorsäure, Kohlensäure, Borsäure, schweflige Säure, usw. oder um Anionen von organischen Säuren wie Oxalsäure, Benzoesäure, Maleinsäure, usw. sowie Polyborate wie B₄O₇²⁻. Daneben kann Lösung 2 natürlich zusätzlich auch Hydroxidionen enthalten.

In einer weiteren Ausführungsform der Erfindung kann das Anion, welches mit Kupferionen einen Niederschlag bildet, erst im Laufe der in Schritt b) ablaufenden Umsetzung aus einer Vorläuferverbindung gebildet werden. Das Anion liegt hierbei in der Vorläuferverbindung in maskierter Form vor und wird aus dieser beim Mischen der Lösungen 1 und 2 und/oder durch Temperaturänderung freigesetzt. Die Vorläuferverbindung kann dabei sowohl in Lösung 1 als auch in Lösung 2 oder in beiden Lösungen vorhanden sein. Als Beispiel für eine solche Vorläuferverbindung sei Dimethylcarbonat genannt, aus dem sich im alkalischen Milieu Carbonationen freisetzen lassen (vgl. M. Faatz et al., Adv. Mater. 2004, Bd. 16, Seiten 996 bis 1000).

Die vorliegende Erfindung sieht außerdem vor, dass die beanspruchte Formulierung die Kupferverbindung gemeinsam mit mind. einem Zinksalz, vorzugsweise in schwerlöslicher Form, und insbesondere ausgewählt aus der Reihe Zinkhydroxid, Zinkcarbonat, Zinkchlorid, Zinkcyanid, Zinkfluorid, Zinkphosphat, Zinkdiphosphat, Zinkoxid und Zinksulfat enthält.

Es wurde bereits mehrfach darauf hingewiesen, dass die erfindungsgemäße Formulierung sich durch ein deutlich gesteigertes Eindringverhalten, eine signifikante verringerte Auswaschung aus dem mit ihr behandelten Material, aber auch eine ausgeprägte Stabilität der sie bildenden Dispersion auszeichnet. Aus diesem Grund ist es als ebenfalls erfindungsgemäß anzusehen, dass der aktive Schutzstoff in Teilchenform vorliegt. Die mittlere Teilchengröße der Formulierung sollte in einem Bereich von 1 nm bis 10 µm liegen, bevorzugt zwischen 10 und 1.000 nm und besonders bevorzugt zwischen 50 und 500 nm. Alternativ oder ergänzend sollten mind. 2 Gew.-% des aktiven Schutzstoffs einen Durchmesser von > 0,5 µm aufweisen.

Es wurde im Rahmen der vorliegenden Beschreibung bereits darauf hingewiesen, dass der erfindungswesentliche Aspekt der neuen Formulierung in der Auswahl eines bestimmten Vertreters aus Verbindungen mit dispergierenden Eigenschaften und dessen Kombination mit dem eigentlichen Schutzstoff zu sehen ist. Dabei handelt es sich um eine Verbindung a) mit mindestens einem verzweigten Kammpolymer mit Polyetherseitengruppen.

Erfindungsgemäß handelt es sich bei der dispergierend wirkenden Komponente a) um einen Polycarboxylatether a₁), einen Polycarboxylatester a₂), ein ungeladenes Copolymer a₃) oder beliebige Mischungen daraus.

Nachfolgend wird zu den einzelnen geeigneten Vertretern detailliert Stellung genommen:
Polyether-enthaltende Copolymere gemäß Copolymer a₁) sind grundsätzlich bestens bekannt und bspw. auch in WO 2006/133933 A2 vorbeschrieben. Derartige Copolymere bestehend aus 2 Monomereinheiten, wobei es sich bei der ersten Monomer-Komponente um ein olefinisch ungesättigtes Monocarbonsäurecomonomer oder einen Ester, oder ein Salz davon und/oder ein olefinisch ungesättigtes Sulfonsäure-Comonomer, oder ein Salz davon, handelt. Die zweite Monomer-Komponente stellt einen Vertreter von Comonomeren der folgenden allgemeinen Formel (I) dar: 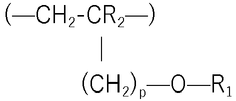 worin R₁ für 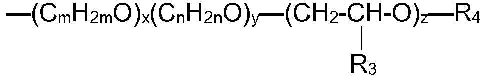 steht und R₂ für H oder einen aliphatischen Kohlenwasserstoffrest mit 1 bis 5 C-Atomen; R₃ = unsubstituierter oder substituierter Arylrest und bevorzugt Phenyl, und R₄ = H oder ein aliphatischer Kohlenwasserstoffrest mit 1 bis 20 C-Atomen, ein cycloaliphatischer Kohlenwasserstoffrest mit 5 bis 8 C-Atomen, ein substituierter Arylrest mit 6 bis 14 C-Atomen oder ein Vertreter der Reihe 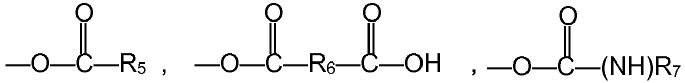
wobei R₅ und R₇ jeweils für einen Alkyl-, Aryl-, Aralkyl-, oder Alkaryl-Rest und
R₆ für einen Alkyliden-, Aryliden-, Aralkyliden- oder Alkaryliden-Rest stehen, und
p = 0, 1, 2, 3 oder 4
m, n bedeuten unabhängig voneinander 2, 3, 4 oder 5,
x und y bedeuten unabhängig voneinander eine ganze Zahl ≤350 und z = 0 bis 200.

In diesem Zusammenhang sei darauf hingewiesen, dass erstens im Copolymer a₁) die Comonomer-Einheiten, welche die Komponenten 1) und 2) darstellen, jeweils keine innermolekularen Unterschiede aufweisen, und/oder zweitens das Copolymer a₁) eine polymere Mischung der Komponenten 1) und 2) darstellt, wobei in diesem Fall die Comonomer-Einheiten innermolekulare Unterschiede hinsichtlich der Reste R₁ und/oder R₂ und/oder R₃ und/oder R₄ und/oder R₅ und/oder R₆ und/oder R₇ und/oder m und/oder n und/oder x und/oder y und/oder z aufweisen und wobei sich die angesprochenen Unterschiede insbesondere auf die Zusammensetzung und Länge der Seitenketten beziehen.

Bezüglich des Copolymers ist die Offenbarung von WO 2006/133933 A2 integraler Bestandteil der vorliegenden Erfindung.

Die vorliegende Erfindung berücksichtigt vorzugsweise eine Formulierung, in der das Copolymer a₁) die Comonomer-Komponente 1) in Anteilen von 30 bis 99 Mol-% und die Comonomer-Komponente 2) in Anteilen von 70 bis 1 Mol-% enthält.

Ein Copolymer vom Typ a₁), welches die Comonomer-Komponente 1) in Anteilen von 40 bis 90 Mol-% und die Comonomer-Komponente 2) in Anteilen von 60 bis 10 Mol-% enthält, ist als ebenfalls bevorzugt anzusehen.

Bei der Comonomer-Komponente 1) kann es sich vorzugsweise um eine Acrylsäure oder ein Salz davon handeln und die Comonomer-Komponente 2) mit p = 0 oder 1, kann eine Vinyl- oder Allylgruppe darstellen und als Rest R₁ einen Polyether enthalten. Es kann als weiterhin vorteilhaft angesehen werden, wenn die Comonomer-Komponente 1, aus der Reihe Acrylsäure, Methacrylsäure, Crotonsäure, Isocrotonsäure, Allylsulfonsäure, Phenylsulfonsäure und deren geeignete Salze, sowie deren Alkyl- oder Hydroxyalkylester stammt.

Weiterhin sieht die vorliegende Erfindung vor, dass das Copolymer a₁) zusätzliche Baugruppen in copolymerisierter Form aufweist. In diesem Fall kann es sich bei den zusätzlichen Baugruppen um Styrole, Acrlyamide und/oder um hydrophobe Verbindungen handeln, wobei Esterstruktureinheiten, Polypropylenoxid und Polypropylenoxid/Polyethylenoxid-Einheiten besonders bevorzugt sind. Zwar ist die beanspruchte Formulierung nicht auf definierte Anteile der genannten zusätzlichen Baugruppen im Copolymer a₁) beschränkt; dennoch ist es erfindungsgemäß vorteilhaft, wenn das Copolymer a₁) die zusätzliche Baugruppe in Anteilen bis 5 Mol-%, bevorzugt von 0,05 bis 3,0 Mol-% und insbesondere von 0,1 bis 1,0 Mol-% enthält.

Hinsichtlich der geeigneten Vertreter gemäß Formel (I) ist festzustellen, dass besondere Vorteile mit einer Alternative verbunden sind, bei der diese für einen Allyl- oder Vinylgruppen-haltigen Ether stehen.

Bei dem Polycarboxylatester a₂) handelt es sich erfindungsgemäß um ein Polymer, welches durch Polymerisation eines Monomergemisches (I), enthaltend als Hauptkomponente einen Vertreter des Monomertyps Carbonsäure, herstellbar ist. Diese Monomermischung (I) enthält ein (Alkoxy)polyalkylenglykolmono(meth)acrylsäureester-Monomer (a) der allgemeinen Formel (II), 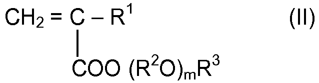 worin R¹ für ein Wasserstoffatom oder eine CH₃-Gruppe steht, R²O für einen Vertreter oder eine Mischung aus mind. zwei Oxyalkylengruppen mit 2 bis 4 Kohlenstoffatomen, R³ für ein Wasserstoffatom oder eine Alkylgruppe mit 1 bis 5 Kohlenstoffatomen und m für eine Zahl zwischen 1 und 250 steht und die durchschnittliche Molzahl der zugesetzten Oxyalkylengruppe repräsentiert, zusätzlich als Monomer (b) eine (Meth)acrylsäure der allgemeinen Formel (III), 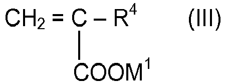 worin R⁴ für ein Wasserstoffatom oder eine CH₃-Gruppe steht und M¹ für ein Wasserstoffatom, ein einwertiges Metallatom, ein zweiwertiges Metallatom, eine Ammoniumgruppe oder eine organische Amingruppe, und ggf. ein Monomer (c), welches mit den Monomeren (a) und (b) copolymerisierbar ist.

Erfindungsgemäß kann das Monomer (a) in einer Menge von 5 bis 98 Gew.-%, das Monomer (b) in einer Menge von 2 bis 95 Gew.-% und das Monomer (c) in einer Menge bis 50 Gew.-% in der Monomermischung (I) enthalten sein, wobei sich die jeweils angegebenen Mengen der Monomere (a), (b) und (c) zu 100 Gew.-% addieren.

Bevorzugte Vertreter im Rahmen der vorliegenden Erfindung des Monomers (a) können sein: Hydroxy-ethyl(meth)acrylat, Hydroxy-propyl(meth)acrylat, Polyethylen-glykol-mono(meth)acrylat, Polypropylen-glykol-mono(meth)acrylat, Polybutylen-glykol-mono(meth)acrylat, Polyethylen-glykol-polypropylen-glykol-mono(meth)acrylat, Polyethylen-glykol-polybutylen-glykol-mono(meth)acrylat, Polypropylen-glykol-polybutylen-glykol-mono(meth)acrylat, Polyethylen-glykol-polypropylen-glykol-polybutylen-glykol-mono(meth)acrylat, Methoxy-polyethylen-glykol-mono(meth)acrylat, Methoxy-polypropylen-glykol-mono(meth)acrylat, Methoxy-polybutylen-glykol-mono(meth)acrylat, Methoxy-polyethylen-glykol-polypropylen-glykol-mono(meth)acrylat, Methoxy-polyethylen-glykol-polybutylen-glykol-mono(meth)acrylat, Methoxy-polypropylen-glykol-polybutylen-glykol-mono(meth)acrylat, Methoxy-polyethylen-glykol-polypropylen-glykol-polybutylen-glykol-mono(meth)acrylat, Ethoxy-polyethylen-glykol-mono(meth)acrylat, Ethoxy-polypropylen-glykol-mono(meth)acrylat, Ethoxy-polybutylen-glykol-mono(meth)acrylat, Ethoxy-polyethylen-glykol-polypropylen-glykol-mono(meth)acrylat, Ethoxy-polyethylen-glykol-polybutylen-glykol-mono(meth)acrylat, Ethoxy-polypropylen-glykol-polybutylen-glykol-mono(meth)acrylat, Ethoxy-polyethylen-glykol-polypropylen-glykol-polybutylen-glykol-mono(meth)acrylat oder Mischungen daraus.

Bei Monomer (b) kann es sich um einen Vertreter der Reihe Acrylsäure, Methacrylsäure, einwertige Metallsalze, zweiwertige Metallsalze, Ammoniumsalze und organische Aminsalze davon oder Mischungen daraus, handeln.

Als Vertreter des Monomers (c) kommen Ester eines aliphatischen Alkohols mit 1 bis 20 Kohlenstoffatomen mit einer ungesättigten Carbonsäure in Frage. Die Carbonsäuren werden in diesem Fall vorzugsweise ausgewählt aus den ungesättigten Carbonsäuren, wie Maleinsäure, Fumarsäure, Citraconsäure, (Meth)Acrylsäure. Es kommen aber auch einwertige Metallsalze, zweiwertige Metallsalze, Ammoniumsalze oder organische Aminsalze davon in Frage. Monomere (c) können aber auch Monoester oder Diester von ungesättigten Carbonsäuren, wie Maleinsäure, Fumarsäure oder Citraconsäure sein, mit aliphatischen C₁ bis C₂₀ Alkoholen, C₂ bis C₄-Glykolen oder auch mit (Alkoxy)Polyalkylenglykol.

Auch bezüglich des ungeladenen Copolymers a₃) als Variante der Komponente a) sieht die vorliegende Erfindung mehrere bevorzugte Alternativen vor.

So kann es sich bei dem ungeladenen Copolymer a₃), welches auch als nichtionisches Copolymer zu bezeichnen ist, um einen Vertreter der allgemeinen Formel (IV) 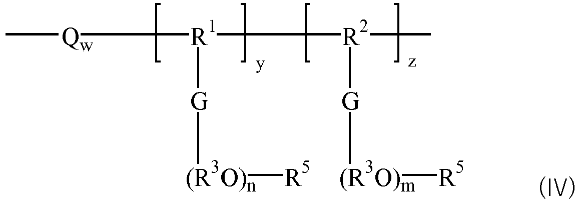 handeln, worin Q für ein ethylenisch ungesättigtes Monomer mit mindestens einem hydrolysierbaren Rest steht, G bedeutet O, C(O)-O oder O-(CH₂)ₚ-O mit p = 2 bis 8, wobei Mischungen der Varianten von G in einem Polymer möglich sind; R¹ und R² bedeuten unabhängig voneinander mind. ein C₂-C₈-Alkyl; R³ umfasst (CH₂)_{c}, wobei es sich bei c um eine ganze Zahl zwischen 2 und 5 handelt und wobei Mischungen der Vertreter von R³ im selben Polymermolekül möglich sind; R⁵ bedeutet mind. einen Vertreter ausgewählt aus der Reihe H, einen linearen oder verzweigten, gesättigten oder ungesättigten C₁-C₂₀ aliphatischen Kohlenwasserstoffrest, einen C₅-C₈ cycloaliphatischen Kohlenwasserstoffrest oder einen substituierten oder unsubstituierten C₆-C₁₄ Arylrest; m = 1 bis 30, n = 31 bis 350, w = 1 bis 40, y = 0 bis 1 und z = 0 bis 1, wobei die Summe (y + z) > 0 ist.

Das ungeladene oder nicht-ionische Copolymer a₃) kann aber auch durch einen Vertreter der allgemeinen Formel (V) repräsentiert werden. 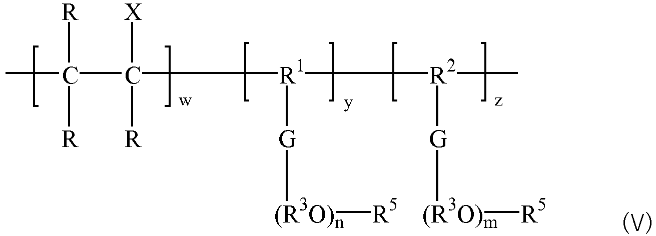 worin X für einen hydrolysierbaren Rest und R für H oder CH₃ stehen; G, p, R¹, R², R³, R⁵, m, n, w, y, z und (y + z) besitzen die unter der Formel (IV) genannten Bedeutungen. Bei dem erwähnten hydrolysierten Rest, kann es sich vorzugsweise um mindestens einen Vertreter, ausgewählt aus der Reihe Alkylester, Hydroxyalkylester, Aminohydroxyalkylester oder Amid handeln.

Es ist im Rahmen der vorliegenden Erfindung allerdings auch möglich, dass es sich bei dem ungeladenen oder nicht-ionischen Copolymer a₃) um mindestens einen Vertreter der allgemeinen Formel (VI) 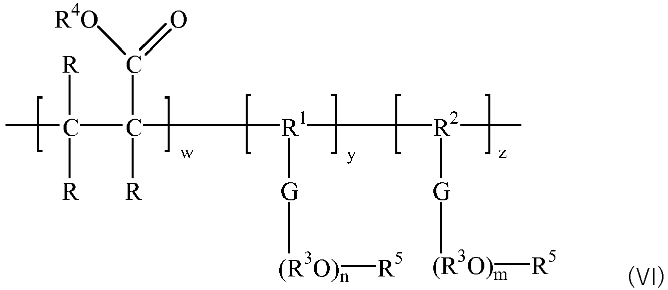 handelt, worin R⁴ mind. einen C₁-C₂₀ Alkyl- oder C₂-C₂₀ Hydroxyalkylrest bedeutet und die Reste G, p, R, R¹, R², R³, c, R⁴, R⁵ sowie m, n, w, y, z und (y + z) die unter den Formeln (IV) und (V) genannten Bedeutungen besitzen.

Vorzugsweise bedeuten p = 4 und R⁴ = C₂H₄OH oder C₃H₆OH; jeder der Reste R⁵ steht für H, m = 5-30, n = 31-250, w = 1,5-30, y = 0 bis 1, z = 0 bis 1 und (y + z) > 0. Das molare Verhältnis von w zu der Summe (y + z) beträgt 1 : 1 bis 20 : 1 und ist vorzugsweise 2 : 1 bis 12 : 1.

Es ist als bevorzugt anzusehen, dass es sich bei dem Copolymer a₃) um ein nichtionisches Polyether-Polyester-Copolymer handelt.

Von der vorliegenden Erfindung ist gleichermaßen die Möglichkeit umfasst, dass die Komponente a) in Anteilen von 5 bis 95 Gew.-%, vorzugsweise von 10 bis 60 Gew.-% und besonders bevorzugt von 15 bis 40 Gew.-%, jeweils bezogen auf die Gesamtformulierung, eingesetzt wird.

Vorgesehen ist auch, dass die beanspruchte Formulierung zusätzlich zu der Komponente a) mindestens einen Entschäumer als Komponente c) und/oder eine Komponente d) mit Oberflächen-aktiver Wirkung enthält, wobei die Komponenten c) und d) strukturell voneinander verschieden sind. In diesem Zusammenhang eignet sich als Entschäumerkomponente c) vorzugsweise mindestens ein Vertreter der Reihe Mineralöl, pflanzliches Öl, Siliconöl, Silikon-haltige Emulsionen, Fettsäure, Fettsäureester, organisch modifiziertes Polysiloxan, Boratester, Alkoxylat, Polyoxyalkylen-Copolymer, Ethylenoxid (EO)-Propylenoxid (PO)-Blockpolymer, acetylenisches Diol mit entschäumenden Eigenschaften, Phosphorsäureester der Formel P(O)(O-R₈)₃₋ₓ,(O-R₉)ₓ worin P = Phosphor, O = Sauerstoff und R₈ und R₉ unabhängig voneinander ein C₂₋₂₀Alkyl oder eine Arylgruppe bedeuten und x = 0, 1 oder 2. Bei der Entschäumerkomponente c) kann es sich insbesondere um mindestens einen Vertreter der Reihe Trialkylphosphat, Polyoxypropylencopolymer und/oder Glyzerinalkoholazetat handeln, wobei das Triiso-butylphosphat als Entschäumerkomponente c) besonders gut geeignet ist. Es kann aber auch eine Mischung aus einem Trialkylphosphat und einem Polyoxypropylencopolymer als zusätzliche Komponente c) in der Formulierung enthalten sein.

Besonders gut geeignete Vertreter der Komponente d) mit Oberflächen-aktiver Wirkung sind Verbindungen ausgewählt aus der Reihe Ethylenoxid/Propylenoxid (EO/PO) Blockcopolymer, Styrol/Maleinsäurecopolymer, Fettsäurealkoholalkoxylat, Alkoholethoxylat R₁₀-(EO)-H mit R₁₀ = eine aliphatische Kohlenwasserstoffgruppe mit 1 bis 25 Kohlenstoffatomen, acetylenisches Diol, Monoalkylpolyalkylen, ethoxyliertes Nonylphenol, Alkylsulfat, Alkylethersulfat, Alkylethersulfonat oder Alkylethercarboxylat. Die Komponente d) kann aber auch einen Alkohol mit einer Polyalkylengruppe umfassen, wobei die Polyalkylengruppe eine Kohlenstoffkettenlänge von 2 bis 20 Kohlenstoffatomen und vorzugsweise von 3 bis 12 Kohlenstoffatomen aufweist.

Generell ist es als vorteilhaft anzusehen, wenn die Entschäumerkomponente c) in freier Form vorliegt, oder aber gebunden an die Dispergiermittelkomponente a), wobei Mischungen dieser beiden Formen selbstverständlich auch in der Formulierung enthalten sein können.

Hinsichtlich der Entschäumerkomponente c) und der Oberflächen-aktiven Komponente d) haben sich jeweils bevorzugte Mengen von 0,01 bis 10 Gew.-%, bezogen auf das Gewicht der Gesamtformulierung als vorteilhaft erwiesen, wobei für die beiden Komponenten natürlich unabhängig voneinander beliebige Anteile aus dem genannten Bereich gewählt werden können. Als bevorzugte Mengen werden für beide Komponenten c) und d), unabhängig voneinander, Mengen zwischen 0,01 bis
5 Gew.-%, wiederum bezogen auf das Gewicht der Gesamtformulierung, eingesetzt, wobei auch in diesem Fall für die beiden genannten Komponenten die jeweiligen Mengen unabhängig voneinander gewählt und diese beliebig miteinander kombiniert werden können.

Im Rahmen der vorliegenden Erfindung kann die beanspruchte Formulierung zusätzlich zu der wesentlichen Komponente a) sowie den ggf. zusätzlich enthaltenen Komponenten c) und/oder d) als weitere Komponente e) mindestens eine Verbindung enthalten sein, die ausgewählt wurde aus der Reihe der niedrig geladenen Polymere oder der Polyphenylalkohole. Diese weitere zusätzliche Komponente kann in Mengen von 1 bis 50 Gew.-%, vorzugsweise von 5 bis 40 Gew.-% und besonders bevorzugt in Mengen von 10 bis 30 Gew.-%, jeweils bezogen auf das Gesamtgewicht der Formulierung eingesetzt sein. Aus der Reihe der niedrig geladenen Polymere eignen sich insbesondere solche Vertreter, die verzweigt sind und die als Seitenkette bevorzugt einen Polyether und/oder einen Polyester enthalten. Beim niedrig geladenen Polymer kann es sich erfindungsgemäß insbesondere um einen Polycarboxylatether und/oder einen Polycarboxylatester, vorzugsweise mit EO-Seitenketten und/oder mit einem Carboxylatanteil bis zu 83 Mol-%, und vorzugsweise bis zu 75 Mol-% handeln.

Es ist im Rahmen der vorliegenden Erfindung als ebenfalls vorteilhaft anzusehen, wenn das niedrig geladene Polymer e) aufgebaut ist aus mindestens einem Monomer ausgewählt aus der Reihe Polyethermonoacrylat, Polyethermonomethacrylat, Polyethermonoallylether, Polyethermonomaleat, monovinylierter Polyether oder Mischungen daraus. Dabei kommen insbesondere Polyethervertreter in Frage, bei denen es sich um ein Alkylenoxid-Polymer mit einem Molekulargewicht von 500 bis 10.000, vorzugsweise von 750 bis 7.500 und insbesondere von 1.000 bis 5.000 handelt. Aus der Reihe der hierfür in Frage kommenden Alkylenoxid-Polymere sieht die vorliegende Erfindung insbesondere Ethylenoxid, Propylenoxid, Butylenoxid oder Mischungen daraus vor.

Monomere ausgewählt aus der Reihe Polypropylen-glykol-acrylate, Polypropylenglykol-methacrylate, Polyethylen-glykol-acrylate, Polyethylen-glykol-methacrylate, Polypropylen-glycol-monovinylether, Polyethylen-glykol-monovinylether, Alkoxy- bzw. Aryloxy-Polyethylen-glykol-acrylate, Alkoxy- bzw. Aryloxy-Polyethylen-glykol-methacrylate,- Alkoxy- bzw. Aryloxy-Polyethylen-glykol-monovinylether, Acrylate, Methacrylate und Monovinylether eines Oxyethylen- und Oxypropylenblock- oder randomisiertes Copolymer, Polypropylen-glykol-allylether, Polyethylen-glykol-allylether, Polyethylen-glykol-monomaleat, Polypropylen-glykol-monomaleat und beliebige Mischungen daraus, sind bevorzugte Bausteine für das niedrig geladenen Polymer e).

Dieses trägt insbesondere eine Carbonsäuregruppe, die vorzugsweise ausgewählt worden ist aus der Reihe Acrylsäure, Methacrylsäure, Maleinsäure, Fumarsäure, Itaconsäure bzw. deren Anhydride. Auch kann das niedrig geladenen Polymer e) eine Sulfonsäuregruppe ausgewählt aus der Reihe 2-Acrylamid-2-methylpropansulfonsäure (AMPS), Vinylsulfonsäure, Allylethersulfonsäure, 2-Sulfoethylmethacrylsäure, Styrolsulfonsäure, Methallylsulfonsäure, deren Natrium-, Kalium- und Ammoniumsalze und beliebige Mischungen davon, und insbesondere um AMPS und Vinylsulfonsäure tragen.

Das neutrale Polymer e) schließlich kann aufgebaut sein aus neutralen Monomerbausteinen, die insbesondere ausgewählt sind aus der Reihe Acrylsäurealkylester und Methacrylsäurealkylester sowie deren Hydroxyalkylester mit bis zu 5 C-Atomen, insbesondere Hydroxyethylacrylat und Hydroxypropylacrylat bzw. Hydroxyethylmethacrylat und Hydroxypropylmethyacrylat, sowie Vinylacetat, N-Vinylpyrrolidon, N-Vinylcaprolactam, Styrol und Methylstyrol, sowie deren Mischungen.

Sämtliche genannten Verbindungen mit dispergierenden Eigenschaften sollten in der erfindungsgemäßen Formulierung in einer Menge von 1,0 bis 40 Gew.-%, vorzugsweise von 3,0 bis 30 Gew.-% und besonders bevorzugt von 5 bis 20 Gew.-%, jeweils bezogen auf den Feststoffgehalt der dispergierenden Komponente enthalten sein.

Von der vorliegenden Erfindung ist ebenfalls vorgesehen, dass die Formulierung zusätzlich zu den erfindungswesentlichen Bestandteilen, nämlich den Schutzstoff und der Verbindung mit dispergierenden Eigenschaften, noch mindestens einen anderen Stoff, vorzugsweise als Hilfsstoff, und ausgewählt aus der Reihe Streckmittel, Emulgator, Bindemittel, Benetzungsmittel, Verdünnungsmittel, Farbstoff, Biozid, Konservierungsmittel, Stabilisierer, Antiabsetzmittel, Markierungsmittel, Trennmittel usw. enthalten kann.

Die erfindungsgemäßen Formulierungen werden üblicherweise durch Vermischen des Schutzstoffes mit Streckmitteln, also flüssigen Lösemitteln und/oder festen Trägerstoffen als Konzentrate bereitgestellt. Derartige Konzentrate können natürlich durch Vermischen mit mindestens einem geeigneten flüssigen Medium, meist Wasser, in gebrauchsfertige Verdünnungen überführt und damit dem speziellen Anwendungsfall angepasst werden. Im Falle der Verwendung von Wasser als Streckmittel können z.B. auch organische Lösemittel als Hilfslösemittel verwendet werden. Als feste Trägerstoffe kommen z.B. natürliche und synthetische Gesteinsmehle in Frage. Als Emulgiermittel sind z.B. nichtionogene und anionische Emulgatoren geeignet, wie ethoxylierte Fettsäureester, Fettsäurealkohole, Fettalkoholether oder auch Alkylsulfate oder Alkylsulfonate.

Unter Bioziden werden bevorzugt Fungizide und Insektizide verstanden; aber auch Konservierungsmittel und Vertreter von Stoffen, die Schadorganismen abwehren oder töten können, sind möglich.

Als Farbstoffe können anorganische Pigmente, wie z.B. Eisenoxid, Titandioxid und organische Farbstoffe, wie z.B. Alizarin-, Azo- und Metallphtalocyaninfarbstoffe enthalten sein. Derartige Pigmente können als anorganische Verbindungen auch physiologisch aktiv sein und damit den eigentlichen Schutzstoff in seiner Wirkung zumindest unterstützen.

Diese weiteren Stoffe kann die Formulierung in einer Gesamtmenge von bis zu 35 Gew.-%, vorzugsweise bis zu 20 Gew.-% und besonders bevorzugt bis 10 Gew.-%, jeweils bezogen auf die Gesamtformulierung, enthalten.

Die von der vorliegenden Erfindung umfassten Formulierungen enthalten im Allgemeinen zwischen 0,5 und 60 Gew.-% Schutzstoff, vorzugsweise zwischen 1 und 35 Gew.-%. Die zum Schutz der Cellulose-haltigen Materialien verwendeten Formulierungen enthalten in ihrer jeweiligen anwendungsfertigen Form als Konzentrate oder daraus erhältlichen Verdünnungen die Schutzstoffe in einer Menge zwischen 0,05 und 35 Gew.-%.

Bevorzugte Zusammensetzungen der erfindungsgemäßen Formulierungen enthalten:
0,5 - 60 Gew.-% einer Kupfer-Verbindung
0,2 - 40 Gew.-% Dispergiermittel
5 - 98 Gew.-% Streckmittel
0,1 - 15 Gew.-% Biozide
0 - 10 Gew.-% Emulgatoren/Stabilisatoren
0 - 5 Gew.-% Farbstoffe / Pigmente

Neben der Formulierung, deren Zusammensetzung und Anteilen an Komponenten beansprucht die vorliegende Erfindung auch die Verwendung derartiger Formulierungen als Schutzmittel für Cellulose-haltige Materialien und insbesondere als Pflanzenschutz- und/oder Holzschutzmittel, wobei holzhaltige Materialien wie bspw. holzhaltige Baumaterialien und vorzugsweise Vollhölzer und/oder Holzwerkstoffe besonders geeignet sind. Die zu behandelnden Materialien können unbehandelt und/oder unbearbeitet sein (Rohhölzer), aber auch in verarbeiteter Form vorliegen.

In Abhängigkeit von dem zu behandelnden Material sollte bei der Verwendung als Holzschutzmittel die Formulierung vorzugsweise in Form einer Suspension vorliegen, die sich insbesondere zum Druckbehandeln für großtechnische Imprägnierverfahren, wie z.B. Vakuum, Doppelvakuum oder Druckverfahren, oder zum Injizieren eignen. Andere bekannte Holzbehandlungsverfahren, wie z.B. Sprühen oder Tauchen sind ebenfalls mögliche Anwendungen.

Die nachfolgenden Beispiele veranschaulichen die Vorteile der Erfindung.

### Beispiele:

### 1) Richtrezepturen für erfindungsgemäße Formulierungen

Die beiden nachfolgenden Erfindungsbeispiele 1 und 2 stellen Vorstufen der endgültigen Holzschutzmittel dar, mit denen die Eignung der Formulierung für spezielle Anforderungsprofile (Penetration, Auswaschung) veranschaulicht werden kann:
- Beispiel 1 (Konzentrat):
   40,0 Gew.-% basisches Kupfercarbonat (Schutzstoff)
   16,0 Gew.-% Polycarboxylatether (Melment® der BASF Construction Polymers GmbH; Dispergiermittel)
   44,0 Gew.-% Wasser

   Diese Formulierung wurde durch Nassvermahlung in einer Rührwerksmühle hergestellt. Die mittlere Partikelgröße in der Gesamtformulierung, gemessen mittels Laserbeugung, betrug ca. 0,15 µm, nach einer Mahldauer von 90 Minuten. Die Konzentrate dieser Suspension sowie deren wässrige Verdünnungen (1:99; 1:49) waren stabil und mit den Verdünnungen wurden Penetrationsprüfungen an Hölzern der europäischen Kiefer (Pinus sylvestris) durchgeführt. Die Hölzer wurden dabei mittels eines Vakuum-Druck-Verfahrens imprägniert. Es wurde eine vollständige Splintholzeindringung erreicht.
- Beispiel 2 (Konzentrat) (nicht erfindungsgemäß)
   15,0 Gew.-% basisches Kupfercarbonat (Schutzstoff)
   6,2 Gew.-% Phosphat-haltiges Polykondensationsprodukt (Dispergiermittel) 78,8 Gew.-% Wasser
   Diese Formulierung wurde durch Nassvermahlung mit 0,5 mm Glas-Mahlkörpern in einer Rührwerksmühle hergestellt. Die mittlere Partikelgröße in der Gesamtformulierung, gemessen mittels Laserbeugung, betrug ca. 0,2 µm, nach einer Mahldauer von 1 h. Die Konzentrate dieser Suspension sowie deren wässrige Verdünnungen (1:99; 1:49) waren stabil und mit den Verdünnungen wurden Penetrationsprüfungen an Hölzern der europäischen Kiefer (Pinus sylvestris) durchgeführt. Die Hölzer wurden dabei mittels eines Vakuum-Druck-Verfahrens imprägniert. Es wurde eine vollständige Splintholzeindringung erreicht.
- Beispiel 3 (Konzentrat)
   40,0 Gew.-% basisches Kupfercarbonat (Schutzstoff)
   1,0 Gew.-% Tebuconazol technisch (Schutzstoff)
   16,0 Gew.-% Polycarboxylatether (Melment® der BASF Construction Polymers GmbH; Dispergiermittel)
   43,0 Gew.-% Wasser
   Diese Formulierung wurde durch Nassvermahlung mit Al₂O₃-Mahlkörpern (durchschnittlicher Durchmesser: 0,4 mm) in einer Rührwerksmühle hergestellt. Die mittlere Partikelgröße in der Gesamtformulierung, gemessen mittels Laserbeugung, betrug ca. 0,16 µm, nach einer Mahldauer von 60 Minuten. Die Konzentrate dieser Suspension sowie deren wässrige Verdünnungen (1:99; 1:49) waren stabil und mit den Verdünnungen wurden Penetrationsprüfungen an Hölzern der europäischen Kiefer (Pinus sylvestris) durchgeführt. Die Hölzer wurden dabei mittels eines Vakuum-Druck-Verfahrens imprägniert. Es wurde eine vollständige Splintholzeindringung der beiden Schutzstoffe erzielt.

### 2) Verdünnungen als erfindungsgemäße Formulierungen:

### - - Beispiel 4

An mit Wasser verdünnten, anwendungsfertigen Suspensionen Beispiele 1 bis 3 enthaltend 0,35 bzw. 0,5 Gew.-% Schutzstoff (Kupfercarbonat), wurde das Auswaschverhalten des Kupfers mittels der Normmethode nach EN 84 überprüft. Die erhaltenen Cu-Auswaschraten lagen im Bereich von durchschnittlich 6 % Cu und damit signifikant niedriger als diejenigen der aktuell üblichen Cu-Alkanolamin-haltigen Produkte (gelöste komplexierte Cu-Verbindungen), die im Bereich zwischen 8 und 12 % liegen. Diese Versuche bestätigten, dass das Auswaschverhalten des Kupfers durch die erhaltenen stabilisierten Teilchen positiv beeinflusst wird.

### 3) Verwendung bei der Druckkesselimprägnierung unterschiedlicher Hölzer

An mit Wasser verdünnten Suspensionen gemäß Beispiele 1 bis 3 wurden mittels bekannter Kesseldruckverfahren Imprägnierversuche an Vollhölzern von Kiefer, Fichte und Tanne durchgeführt und dabei sehr gute Penetrationsergebnisse erzielt. Die Cu-Eindringung bei den imprägnierten Hölzern war dabei immer mindestens so gut oder sogar besser wie diejenige von aktuell üblichen Cu-Alkanolamin-haltigen Produkten. Die Verwendung als Holzschutzmittel ist damit sehr gut gegeben.

## Patentansprüche

1. Formulierung enthaltend mindestens einen gegenüber Cellulose-haltigen Materialien aktiven Schutzstoff und mindestens eine Verbindung mit dispergierenden Eigenschaften, **dadurch gekennzeichnet, dass** es sich bei der Verbindung mit dispergierenden Eigenschaften um eine Verbindung a) enthaltend ein verzweigtes Kammpolymer mit Polyether-Seitenketten handelt, und es sich bei dem aktiven Schutzstoff um mindestens eine Kupferverbindung in nanopartikulärer Form handelt, wobei die mittlere Teilchengröße des aktiven Schutzstoffs gemessen mittels Laserbeugung in einem Bereich von 1 bis 1000 nm liegt,
wobei es sich bei der Verbindung a) um einen Polycarboxylatether a₁), einen Polycarboxylatester a₂), ein ungeladenes Copolymer a₃) oder Mischungen daraus handelt,
wobei es sich bei dem Polycarboxylatester a₂) um ein Polymer handelt, herstellbar durch Polymerisation eines Monomergemisches (I), enthaltend als Hauptkomponente einen Vertreter des Monomertyps Carbonsäure, wobei die Monomermischung (I) ein (Alkoxy)polyalkylenglykolmono(meth)acrylsäureester-Monomer (a) der allgemeinen Formel (II) 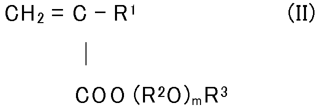 enthält, worin R¹ für ein Wasserstoffatom oder eine CH₃-Gruppe steht, R²O für einen Vertreter oder eine Mischung aus mind. zwei Oxyalkylengruppen mit 2 bis 4 Kohlenstoffatomen, R³ für ein Wasserstoffatom oder eine Alkylgruppe mit 1 bis 5 Kohlenstoffatomen und m für eine Zahl zwischen 1 und 250 steht und die durchschnittliche Molzahl der zugesetzten Oxyalkylengruppe repräsentiert,
zusätzlich als Monomer (b) eine (Meth)acrylsäure der allgemeinen Formel (III), 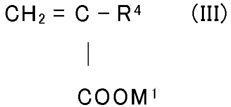 worin R⁴ für ein Wasserstoffatom oder eine CH₃-Gruppe steht und M¹ für ein Wasserstoffatom, ein einwertiges Metallatom, ein zweiwertiges Metallatom, eine Ammoniumgruppe oder eine organische Amingruppe, und ggf. ein Monomer (c), welches mit den Monomeren (a) und (b) copolymerisierbar ist, und
wobei die Kupferverbindung ein schwerlösliches Kupfersalz ist.

2. Formulierung nach Anspruch 1, **dadurch gekennzeichnet, dass** mindestens 2 Gew.-% des aktiven Schutzstoffs einen Durchmesser von > 0,5 Mikrometer aufweisen.

3. Formulierung nach einem der Ansprüche 1 bis 2, **dadurch gekennzeichnet, dass** das schwerlösliche Kupfersalz ausgewählt ist aus der Reihe bestehend aus Kupferhydroxid, -carbonat, -phosphat, -hydrogenphosphat, -oxalat, -borat und -tetraborat oder deren Mischungen.

4. Formulierung nach einem der Ansprüche 1 bis 2, **dadurch gekennzeichnet, dass** das schwerlösliche Kupfersalz ausgewählt ist aus der Reihe Kupferhydroxid, Kupferborat, basisches Kupferborat, Kupfercarbonat, basisches Kupfercarbonat, tribasisches Kupfersulfat, Kupferoxychlorid, alkalisches Kupfernitrat, Kupfereisen(III)-cyanid, Kupfereisen(III)-cyanat, Kupferfluorsilicat, Kupferthiocyanat, Kupferdiphosphat, Kupferborid, Kupferphosphat und Kupferoxid.

5. Formulierung nach Anspruch 1, **dadurch gekennzeichnet, dass** es sich bei dem aktiven Schutzstoff um mindestens eine Kupferverbindung handelt, die oberflächenmodifiziert ist durch den Einfluss der Verbindung mit dispergierenden Eigenschaften, und/oder dass sie eine oberflächenmodifizierte Kupferverbindung enthält, die mit einem Verfahren hergestellt wurde, umfassend die Schritte:
a) Herstellung einer wässrigen Lösung enthaltend Kupferionen (Lösung 1) und einer wässrigen Lösung enthaltend mindestens ein Anion, welches mit Kupferionen einen Trübstoff bildet (Lösung 2), wobei mindestens eine der beiden Lösungen 1 und 2 mindestens eine Hilfssubstanz mit dispergierenden Eigenschaften nach Anspruch 1 enthält,
b) Mischen der in Schritt a) hergestellten Lösungen 1 und 2 bei einer Temperatur im Bereich von 0 bis 100° C, wobei die oberflächenmodifizierten nanopartikulären Kupferverbindungen entstehen und unter Bildung einer wässrigen Dispersion in der Lösung teilweise eine Trübung bilden,
c) gegebenenfalls Abtrennen der oberflächenmodifizierten nanopartikulären Kupferverbindungen aus der in Schritt b) erhaltenen wässrigen Dispersion, und
d) gegebenenfalls Trocknung der in Schritt c) erhaltenen oberflächenmodifizierten nanopartikulären Kupferverbindungen.

6. Formulierung nach einem der Ansprüche 1 bis 5, **dadurch gekennzeichnet, dass** sie die Kupferverbindung gemeinsam mit mindestens einem Zinksalz enthält.

7. Formulierung nach Anspruch 1, **dadurch gekennzeichnet, dass** es sich bei Verbindung a) um ein Copolymer a₁) handelt, bestehend aus
1) mindestens einem olefinisch ungesättigten MonocarbonsäureComonomer oder einem Ester oder einem Salz davon und/oder einem olefinisch ungesättigten Sulfonsäure-Comonomer oder einem Salz davon, und
2) mindestens einem Comonomer der allg. Formel (I) 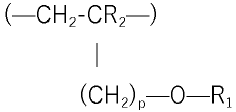 worin R₁ für 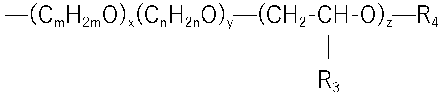 steht und
R₂ für H oder einen aliphatischen Kohlenwasserstoffrest mit 1 bis 5 C-Atomen;
R₃ = unsubstituierter oder substituierter Arylrest, und
R₄ = H oder ein aliphatischer Kohlenwasserstoffrest mit 1 bis 20 C-Atomen, ein cycloaliphatischer Kohlenwasserstoffrest mit 5 bis 8 C-Atomen, ein substituierter Arylrest mit 6 bis 14 C-Atomen oder ein Vertreter der Reihe 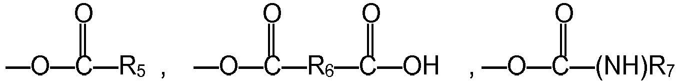
wobei
R₅ und R₇ jeweils für einen Alkyl-, Aryl-, Aralkyl-, oder Alkaryl-Rest und
R₆ für einen Alkyliden-, Aryliden-, Aralkyliden- oder Alkaryliden-Rest stehen, und
p = 0, 1, 2, 3 oder 4
m, n bedeuten unabhängig voneinander 2, 3, 4 oder 5,
x und y bedeuten unabhängig voneinander eine ganze Zahl ≤350 und
z = 0 bis 200,
wobei (I) im Copolymer a₁) die Comonomer-Einheiten, welche die Komponenten 1) und 2) darstellen, jeweils keine innermolekularen Unterschiede aufweisen, und/oder (II) das Copolymer a₁) eine polymere Mischung der Komponenten 1) und 2) darstellt,
wobei in diesem Fall die Comonomer-Einheiten innermolekulare Unterschiede hinsichtlich der Reste R₁ und/oder R₂ und/oder R₃ und/oder R₄ und/oder R₅ und/oder R₆ und/oder R₇ und/oder m und/oder n und/oder x und/oder y und/oder z aufweisen.

8. Formulierung nach Anspruch 1, **dadurch gekennzeichnet, dass**
das Monomer (a) in einer Menge von 5 bis 98 Gew.-%, das Monomer (b) in einer Menge von 2 bis 95 Gew.-% und das Monomer (c) in einer Menge bis 50 Gew.-% in der Monomermischung (I) enthalten sind, wobei sich die jeweiligen Mengen der Monomere (a), (b) und (c) zu 100 Gew.-% addieren.

9. Formulierung nach Anspruch 1, **dadurch gekennzeichnet, dass** es sich bei dem nicht-ionischen Copolymer a₃) um einen Vertreter der allgemeinen Formel (IV) 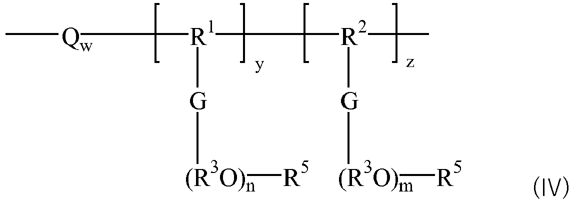 handelt,
worin Q für ein ethylenisch ungesättigtes Monomer mit mindestens einem hydrolysierbaren Rest steht, G bedeutet O, C(O)-O oder O-(CH₂)ₚ-O mit p = 2 bis 8, wobei Mischungen der Varianten von G in einem Polymer möglich sind; R¹ und R² bedeuten unabhängig voneinander mind. ein C₂-C₈-Alkyl; R³ umfasst (CH₂)_{c}, wobei es sich bei c um eine ganze Zahl zwischen 2 und 5 handelt und wobei Mischungen der Vertreter von R³ im selben Polymermolekül möglich sind; R⁵ bedeutet mind. einen Vertreter ausgewählt aus der Reihe H, einen linearen oder verzweigten, gesättigten oder ungesättigten C₁-C₂₀ aliphatischen Kohlenwasserstoffrest, einen C₅-C₈ cycloaliphatischen Kohlenwasserstoffrest oder einen substituierten oder unsubstituierten C₆-C₁₄ Arylrest; m = 1 bis 30, n = 31 bis 350, w = 1 bis 40, y = 0 bis 1 und z = 0 bis 1, wobei die Summe (y + z) > 0 ist.

10. Formulierung nach einem der Ansprüche 1 bis 9, **dadurch gekennzeichnet, dass** die Verbindung a) in Anteilen von 5 bis 95 Gew.-% bezogen auf die Gesamtformulierung, enthalten ist.

11. Formulierung nach einem der Ansprüche 1 bis 10, **dadurch gekennzeichnet, dass** sie zusätzlich zu dem Schutzstoff und der Verbindung mit dispergierenden Eigenschaften mindestens einen anderen Stoff ausgewählt aus der Reihe Streckmittel, Emulgator, Bindemittel, Benetzungsmittel, Verdünnungsmittel, Farbstoff, Biozid, Konservierungsmittel, Stabilisierer, Antiabsetzmittel, Markierungsmittel oder Trennmittel enthält.

12. Formulierung nach Anspruch 11, **dadurch gekennzeichnet, dass** sie den mindestens einen zusätzlichen Stoff in einer Gesamtmenge von bis zu 35 Gew.-% bezogen auf die Gesamtformulierung, enthält.

13. Verwendung der Formulierung nach einem der Ansprüche 1 bis 12 als Holzschutzmittel.

14. Verwendung nach Anspruch 13 für Vollholz und/oder Holzwerkstoffe.

15. Verwendung nach einem der Ansprüche 13 oder 14 zum Druckbehandeln.

## Claims

1. Formulation containing at least one protective substance that is active with respect to cellulose-containing materials and at least one compound with dispersing properties, **characterized in that** the compound with dispersing properties is a compound a) containing a branched comb-shaped polymer with polyether side chains, and the active protective substance is at least one copper compound in nanoparticulate form, wherein the average particle size of the active protective substance, measured using laser diffraction, is in a range from 1 to 1000 nm, wherein the compound a) is a polycarboxylate ether a₁), a polycarboxylate ester a₂), an uncharged copolymer a₃) or mixtures thereof, wherein the polycarboxylate ester a₂) is a polymer, producible by polymerization of a monomer mixture (I), containing a representative of the carboxylic acid type of monomer as main component,
wherein the monomer mixture (I) contains an (alkoxy)polyalkylene glycol mono(meth)acrylic acid ester monomer (a) of general formula (II) 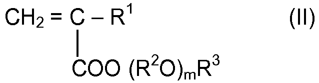 in which R¹ stands for a hydrogen atom or a CH₃ group, R²O for a representative or a mixture of at least two oxyalkylene groups with 2 to 4 carbon atoms, R³ for a hydrogen atom or an alkyl group with 1 to 5 carbon atoms and m stands for a number between 1 and 250 and represents the average number of moles of the added oxyalkylene group,
additionally, as monomer (b), a (meth)acrylic acid of general formula (III), 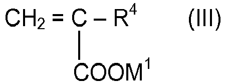 in which R⁴ stands for a hydrogen atom or a CH₃ group and M¹ for a hydrogen atom, a monovalent metal atom, a divalent metal atom, an ammonium group or an organic amine group, and optionally a monomer (c), which is copolymerizable with monomers (a) and (b), and
wherein the copper compound is a sparingly soluble copper salt.

2. Formulation according to Claim 1, **characterized in that** at least 2 wt.% of the active protective substance has a diameter of > 0.5 micrometre.

3. Formulation according to one of Claims 1 or 2, **characterized in that** the sparingly soluble copper salt is selected from the group consisting of copper hydroxide, carbonate, phosphate, hydrogen phosphate, oxalate, borate and tetraborate or mixtures thereof.

4. Formulation according to one of Claims 1 or 2, **characterized in that** the sparingly soluble copper salt is selected from the group copper hydroxide, copper borate, basic copper borate, copper carbonate, basic copper carbonate, tribasic copper sulfate, copper oxychloride, alkaline copper nitrate, copper-iron(III) cyanide, copper-iron(III) cyanate, copper fluorosilicate, copper thiocyanate, copper diphosphate, copper boride, copper phosphate and copper oxide.

5. Formulation according to Claim 1, **characterized in that** the active protective substance is at least one copper compound that has been surface-modified by the influence of the compound with dispersing properties, and/or **in that** it contains a surface-modified copper compound which was produced by a method comprising the steps:
a) preparing an aqueous solution containing copper ions (solution 1) and an aqueous solution containing at least one anion that forms a turbid matter with copper ions (solution 2), wherein at least one of the two solutions 1 and 2 contains at least one processing aid with dispersing properties according to Claim 1,
b) mixing the solutions 1 and 2 prepared in step a) at a temperature in the range from 0 to 100°C, wherein the surface-modified nanoparticulate copper compounds are generated and partially form turbidity, with formation of an aqueous dispersion in the solution,
c) optionally separating the surface-modified nanoparticulate copper compounds from the aqueous dispersion obtained in step b), and
d) optionally drying the surface-modified nanoparticulate copper compounds obtained in step c).

6. Formulation according to one of Claims 1 to 5, **characterized in that** it contains the copper compound together with at least one zinc salt.

7. Formulation according to Claim 1, **characterized in that** compound a) is a copolymer a₁), consisting of
1) at least one olefinically unsaturated monocarboxylic acid comonomer or an ester or a salt thereof and/or an olefinically unsaturated sulfonic acid comonomer or a salt thereof, and
2) at least one comonomer of general formula (I) 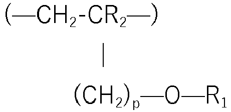 in which R₁ stands for 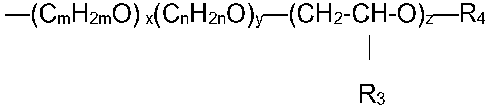 and
R₂ stands for H or an aliphatic hydrocarbon residue with 1 to 5 carbon atoms; R₃ = unsubstituted or substituted aryl residue and
R₄ = H or an aliphatic hydrocarbon residue with 1 to 20 carbon atoms, a cycloaliphatic hydrocarbon residue with 5 to 8 carbon atoms, a substituted aryl residue with 6 to 14 carbon atoms or a member of the series 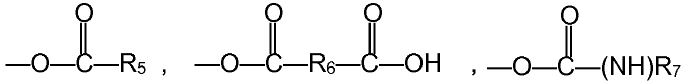
wherein
R₅ and R₇ stand in each case for an alkyl, aryl, aralkyl, or alkaryl residue and
R₆ stands for an alkylidene, arylidene, aralkylidene or alkarylidene residue, and
p = 0, 1, 2, 3 or 4
m, n denote, independently of one another, 2, 3, 4 or 5, x and y denote, independently of one another, an integer ≤350 and
z = 0 to 200,
wherein (I) in the copolymer a₁) the comonomer units, which represent the components 1) and 2), in each case have no intramolecular differences, and/or (II) the copolymer a₁) represents a polymer mixture of the components 1) and 2),
wherein in this case the comonomer units have intramolecular differences with respect to the residues R₁ and/or R₂ and/or R₃ and/or R₄ and/or R₅ and/or R₆ and/or R₇ and/or m and/or n and/or x and/or y and/or z.

8. Formulation according to Claim 1, **characterized in that** monomer (a) is contained in the monomer mixture (I) in an amount from 5 to 98 wt.%, monomer (b) in an amount from 2 to 95 wt.% and monomer (c) in an amount of up to 50 wt.%, wherein the respective amounts of monomers (a), (b) and (c) add up to 100 wt.%.

9. Formulation according to Claim 1, **characterized in that** the nonionic copolymer a₃) is a representative of general formula (IV) 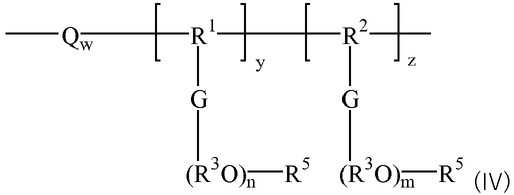 in which Q stands for an ethylenically unsaturated monomer with at least one hydrolyzable residue, G denotes O, C(O)-O or O-(CH₂)ₚ-O with p = 2 to 8, wherein mixtures of the variants of G in a polymer are possible; R¹ and R² denote, independently of one another, at least one C₂-C₈-alkyl; R³ comprises (CH₂)_{c}, wherein c is an integer between 2 and 5 and wherein mixtures of the representatives of R³ in the same polymer molecule are possible; R⁵ means at least one representative selected from the group H, a linear or branched, saturated or unsaturated C₁-C₂₀ aliphatic hydrocarbon residue, a C₅-C₈ cycloaliphatic hydrocarbon residue or a substituted or unsubstituted C₆-C₁₄ aryl residue; m = 1 to 30, n = 31 to 350, w = 1 to 40, y = 0 to 1 and z = 0 to 1, wherein the sum (y + z) > 0.

10. Formulation according to one of Claims 1 to 9, **characterized in that** compound a) is contained in proportions from 5 to 95 wt.% relative to the total formulation.

11. Formulation according to one of Claims 1 to 10, **characterized in that** in addition to the protective substance and the compound with dispersing properties, it contains at least one other substance selected from the group extender, emulsifier, binder, wetting agent, diluent, dye, biocide, preservatives, stabilizer, antisettling agent, marking agent or separating agent.

12. Formulation according to Claim 11, **characterized in that** it contains the at least one additional substance in a total amount of up to 35 wt.% relative to the total formulation.

13. Use of the formulation according to one of Claims 1 to 12 as wood preservative.

14. Use according to Claim 13 for solid wood and/or wood-based materials.

15. Use according to one of Claims 13 or 14 for pressure treatment.

## Revendications

1. Formulation contenant au moins une substance de protection active vis-à-vis des matériaux contenant de la cellulose et au moins un composé présentant des propriétés de dispersion, **caractérisée en ce que** le composé présentant des propriétés de dispersion consiste en un composé a) contenant un polymère ramifié en peigne contenant des chaînes latérales polyéther, et la substance de protection active consiste en au moins un composé de cuivre sous forme nanoparticulaire, la taille de particule moyenne de la substance de protection active mesurée par diffraction laser se situant dans une plage allant de 1 à 1 000 nm,
le composé a) consistant en un éther de polycarboxylate a₁), un ester de polycarboxylate a₂), un copolymère non chargé a₃) ou des mélanges de ceux-ci,
l'ester de polycarboxylate a₂) consistant en un polymère qui peut être fabriqué par polymérisation d'un mélange de monomères (I), contenant en tant que composant principal un représentant du type de monomère acide carboxylique, le mélange de monomères (I) contenant un monomère ester de l'acide mono(méth)acrylique d'(alcoxy)polyalkylène glycol (a) de la formule générale (II) : 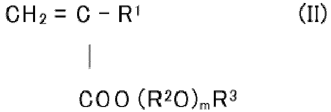 dans laquelle R¹ représente un atome d'hydrogène ou un groupe CH₃, R²O représente un représentant ou un mélange d'au moins deux groupes oxyalkylène contenant 2 à 4 atomes de carbone, R³ représente un atome d'hydrogène ou un groupe alkyle de 1 à 5 atomes de carbone, et m représente un nombre compris entre 1 et 250, et représente le nombre de moles moyen du groupe oxyalkylène ajouté,
en outre, en tant que monomère (b), un acide (méth)acrylique de la formule générale (III) : 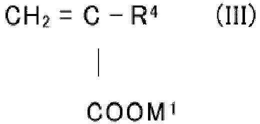 dans laquelle R⁴ représente un atome d'hydrogène ou un groupe CH₃, et M¹ représente un atome d'hydrogène, un atome métallique monovalent, un atome métallique bivalent, un groupe ammonium ou un groupe amino organique,
et éventuellement un monomère (c), qui est copolymérisable avec les monomères (a) et (b),
le composé de cuivre étant un sel de cuivre difficilement soluble.

2. Formulation selon la revendication 1, **caractérisée en ce qu'**au moins 2 % en poids de la substance de protection active présente un diamètre > 0,5 micromètre.

3. Formulation selon l'une quelconque des revendications 1 à 2, **caractérisée en ce que** le sel de cuivre difficilement soluble est choisi dans la série constituée par l'hydroxyde, le carbonate, le phosphate, l'hydrogénophosphate, l'oxalate, le borate et le tétraborate de cuivre ou leurs mélanges.

4. Formulation selon l'une quelconque des revendications 1 à 2, **caractérisée en ce que** le sel de cuivre difficilement soluble est choisi dans la série constituée par l'hydroxyde de cuivre, le borate de cuivre, le borate de cuivre basique, le carbonate de cuivre, le carbonate de cuivre basique, le sulfate de cuivre tribasique, l'oxychlorure de cuivre, le nitrate de cuivre alcalin, le cyanure de cuivre et de fer (III), le cyanate de cuivre et de fer (III), le fluorosilicate de cuivre, le thiocyanate de cuivre, le diphosphate de cuivre, le borure de cuivre, le phosphate de cuivre et l'oxyde de cuivre.

5. Formulation selon la revendication 1, **caractérisée en ce que** la substance de protection active consiste en au moins un composé de cuivre, qui est modifié en surface par l'action du composé présentant des propriétés de dispersion, et/ou **en ce qu'**elle contient un composé de cuivre modifié en surface, qui a été fabriqué par un procédé comprenant les étapes suivantes :
a) la fabrication d'une solution aqueuse contenant des ions cuivre (solution 1) et d'une solution aqueuse contenant au moins un anion, qui forme avec les ions cuivre une substance trouble (solution 2), au moins une des deux solutions 1 et 2 contenant au moins une substance auxiliaire présentant des propriétés de dispersion selon la revendication 1,
b) le mélange des solutions 1 et 2 fabriquées à l'étape a) à une température dans la plage allant de 0 à 100 °C, les composés de cuivre nanoparticulaires modifiés en surface se formant et formant partiellement un trouble dans la solution avec formation d'une dispersion aqueuse,
c) éventuellement la séparation des composés de cuivre nanoparticulaires modifiés en surface de la dispersion aqueuse obtenue à l'étape b), et
d) éventuellement le séchage des composés de cuivre nanoparticulaires modifiés en surface obtenus à l'étape c) .

6. Formulation selon l'une quelconque des revendications 1 à 5, **caractérisée en ce qu'**elle contient le composé de cuivre conjointement avec au moins un sel de zinc.

7. Formulation selon la revendication 1, **caractérisée en ce que** le composé a) consiste en un copolymère a₁), constitué par :
1) au moins un comonomère d'acide monocarboxylique oléfiniquement insaturé ou un ester ou un sel de celui-ci et/ou un comonomère d'acide sulfonique oléfiniquement insaturé ou un sel de celui-ci, et
2) au moins un comonomère de la formule générale (I) : 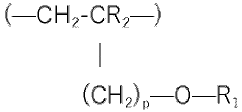 dans laquelle R₁ représente 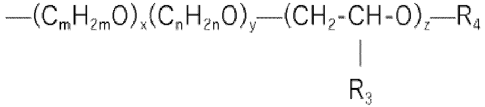 et
R₂ représente H ou un radical hydrocarboné aliphatique de 1 à 5 atomes C ;
R₃ = radical aryle non substitué ou substitué, et
R₄ = H ou un radical hydrocarboné aliphatique de 1 à 20 atomes C, un radical hydrocarboné cycloaliphatique de 5 à 8 atomes C, un radical aryle substitué de 6 à 14 atomes C, ou un représentant de la série constituée par : 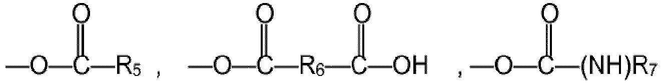
R₅ et R₇ représentant chacun un radical alkyle, aryle, aralkyle ou alkaryle, et
R₆ représentant un radical alkylidène, arylidène, aralkylidène ou alkarylidène, et
p = 0, 1, 2, 3 ou 4,
m, n signifiant indépendamment l'un de l'autre 2, 3, 4 ou 5,
x et y signifiant indépendamment l'un de l'autre un nombre entier ≤ 350, et
z = 0 à 200,
(I) dans le copolymère a₁), les unités comonomères qui représentent les composants 1) et 2) ne présentant respectivement pas de différence intramoléculaire, et/ou (II) le copolymère a₁) étant un mélange polymère des composants 1) et 2),
dans ce cas, les unités comonomères présentant des différences intramoléculaires au regard des radicaux R₁ et/ou R₂ et/ou R₃ et/ou R₄ et/ou R₅ et/ou R₆ et/ou R₇ et/ou m et/ou n et/ou x et/ou y et/ou z.

8. Formulation selon la revendication 1, **caractérisée en ce que**
le monomère (a) est contenu en une quantité de 5 à 98 % en poids, le monomère (b) est contenu en une quantité de 2 à 95 % en poids et le monomère (c) est contenu en une quantité de jusqu'à 50 % en poids dans le mélange de monomères (I), la somme des quantités respectives des monomères (a), (b) et (c) étant de 100 % en poids.

9. Formulation selon la revendication 1, **caractérisée en ce que** le copolymère non ionique a₃) consiste en un représentant de la formule générale (IV) : 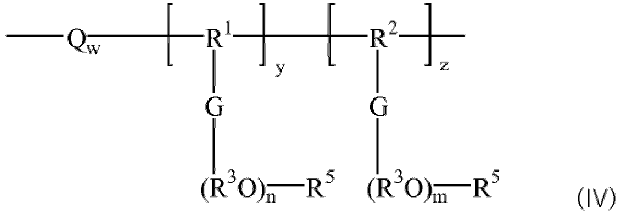 dans laquelle Q représente un monomère éthyléniquement insaturé contenant au moins un radical hydrolysable, G signifie O, C(O)-O ou O-(CH₂)ₚ-O avec p = 2 à 8, des mélanges des variantes de G dans un polymère étant possibles ; R¹ et R² signifient indépendamment l'un de l'autre au moins un alkyle en C₂-C₈ ; R³ comprend (CH₂)_{c}, c étant un nombre entier compris entre 2 et 5, et des mélanges des représentants de R³ dans la même molécule de polymère étant possibles ; R⁵ signifie au moins un représentant choisi dans la série constituée par H, un radical hydrocarboné aliphatique en C₁-C₂₀ linéaire ou ramifié, saturé ou insaturé, un radical hydrocarboné cycloaliphatique en C₅-C₈, ou un radical aryle en C₆-C₁₄ substitué ou non substitué ; m = 1 à 30, n = 31 à 350, w = 1 à 40, y = 0 à 1 et z = 0 à 1, la somme (y+z) > 0.

10. Formulation selon l'une quelconque des revendications 1 à 9, **caractérisée en ce que** le composé a) est contenu en proportions de 5 à 95 % en poids, par rapport à la formulation totale.

11. Formulation selon l'une quelconque des revendications 1 à 10, **caractérisée en ce qu'**elle contient, en plus de la substance de protection et du composé présentant des propriétés de dispersion, au moins une autre substance, choisie dans la série constituée par les extendeurs, les émulsifiants, les liants, les agents mouillants, les diluants, les colorants, les biocides, les conservateurs, les stabilisateurs, les agents anti-sédimentation, les agents de marquage ou les agents de séparation.

12. Formulation selon la revendication 11, **caractérisée en ce qu'**elle contient ladite au moins une substance supplémentaire en une quantité totale de jusqu'à 35 % en poids, par rapport à la formulation totale.

13. Utilisation de la formulation selon l'une quelconque des revendications 1 à 12 en tant qu'agent de protection du bois.

14. Utilisation selon la revendication 13 pour le bois massif et/ou les matériaux à base de bois.

15. Utilisation selon l'une quelconque des revendications 13 ou 14 pour le traitement sous pression.
